# EUROPEAN PATENT SPECIFICATION

(11) **EP 1 942 569 B1**
(45) Date of publication and mention of the grant of the patent: **12.06.2013**
(21) Application number: 07000123.5
(22) Date of filing: 04.01.2007
(51) Int. Cl.: H02J 7/00

(54) **Method of charging batteries**
Ladeverfahren für Batterien
Procédé de charge de batteries

(43) Date of publication of application: 09.07.2008
(73) Proprietor: AENEAS ENERGY TECHNOLOGY CO., LTD., Taipei (TW)
(72) Inventor: Hsu, Deng Shien, Taipei (TW); Yu, Zong-Long, Shanghai City (CN); Tsai, Wen-Ping, Datong District Taipei City 103 (TW)
(74) Representative: Liesegang, Eva

(56) References cited:
- EP-A- 1 603 212
- US-A1- 2005 083 016

## Description

### FIELD OF THE INVENTION

The present invention relates to a method of charging batteries, and more particularly to a method of charging batteries, in which a microcontroller and a series divider resistor are used to control the charging of a plurality of serially connected batteries via a power supply, so that all the batteries are best charged.

### BACKGROUND OF THE INVENTION

With the quickly increased demands for all kinds of portable electronic products, such as digital camera, personal digital assistant (PDA), MP3, etc., there are also increasing demands for high-capacity rechargeable batteries that can be fully charged within a largely shortened time with a compact and lightweight charger that has low manufacturing cost and long service life.

Most of the currently available battery chargers are CC/CV battery chargers, namely, constant current/constant voltage battery chargers that combine the constant current charging and the constant voltage charging technique to charge batteries or battery packs.

United States Patent Application US2005/0083016 A1 discloses CC/CV battery chargers that comprise a charging branch and a bypassing branch to recharge the batteries with a constant current. Particular reference is made to Fig. 1 of US 2005/0083016 A1, in which such a conventional charging circuit is illustrated.

There is also a pulse charging technique that uses constant current to charge batteries and checks the charge voltage status at the battery end, and then increases or decreases a pulse width modulation signal based on the obtained charge voltage status, so as to control and regulate from time to time the output to the batteries during charging. In this manner, it is possible to dynamically adjust the average charge current to the batteries.

However, in the CC/CV charging technique, a large number of detecting points is required, and detecting devices for this purpose must be high-precision to inevitably largely increase the manufacturing cost of the charger. On the other hand, in the pulse charging technique, a highly strict requirement is set for the battery cell protective IC during the course of pulse charging, and the pulse charging circuit is complicate and therefore not convenient for use.

It is therefore tried by the inventor to develop a method of charging batteries to overcome the disadvantages existed in the conventional battery charging techniques, so that a simplified and cost-reduced charging circuit enabling upgraded accuracy of battery charge may be obtained.

### SUMMARY OF THE INVENTION

A primary object of the present invention is to provide amethodof charging batteries, in which a microcontroller and a series divider resistor are used to enable largely simplified and cost-reduced charging circuit and upgraded battery charging accuracy.

To achieve the above and other objects, the method of charging batteries according to the present invention includes the following steps:
(1) Form a battery pack from a plurality of serially connected batteries, and serially connect the battery pack to a power supply;
(2) Form a series divider resistor by serially connecting a first divider resistor to a second divider resistor, and parallelly connect the series divider resistor to the battery pack;
(3) Connect a microcontroller to the power supply, and parallelly connect the microcontroller to the second divider resistor;
(4) Cause the microcontroller to send out a first control signal to the power supply, so that the power supply supplies a constant charge current source to the battery pack;
(5) When any one of the batteries in the battery pack is charged to a first preset voltage value, the battery pack disconnects that battery from a corresponding charging circuit thereof;
(6) The microcontroller detects via the series divider resistor a voltage value of the battery pack; when the detected voltage value is smaller than a second preset voltage value, or when a FULL signal output by the battery pack is received, the microcontroller outputs a RESET signal to all charging circuits, and all the charging circuits are recharged in accordance with Step (7); and
(7) Determine whether the number of times the RESET signal has been output has reached a preset value; if yes, power from the power supply is interrupted by the microcontroller to stop charging the batteries; and if not, a second control signal is output by the microcontroller to the power supply, so that the power supply lowers the constant charge current source, and the charging returns to the step (4).

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein
Fig. 1 is a schematic view showing a method of charging batteries according to a preferred embodiment of the present invention; and
Fig. 2 is a flowchart showing the steps included in the method of the present invention.

### DETAILED DESCRIPTION OF THE PREFERRED EMBODIMENTS

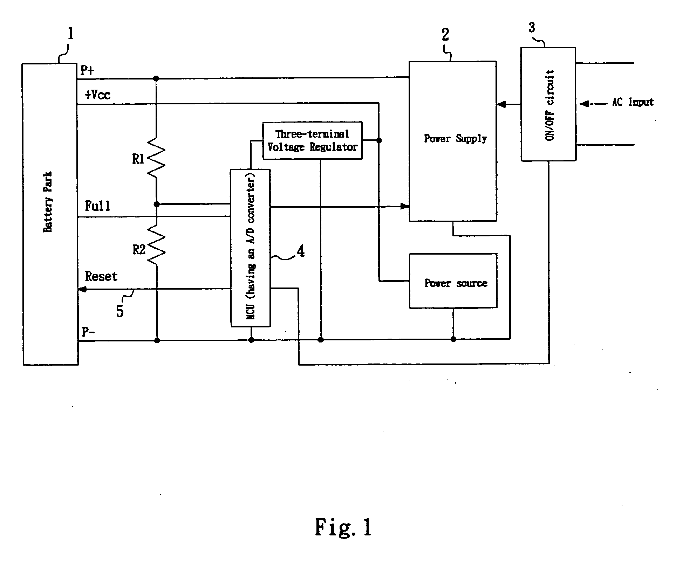

Please refer to Fig. 1 that is a schematic view showing a method of charging batteries according to a preferred embodiment of the present invention. As shown, in the method of the present invention, a plurality of batteries are serially connected to form a battery pack 1, and the battery pack 1 is serially connected to a power supply 2, which may include but not limited to a stepped variable charger, a linear variable charger, etc. Wherein, the batteries may be high-capacity capacitors or Li-ion batteries. In addition, a first divider resistor R1 and a second divider resistor R2 are serially connected to form a series divider resistor, and the series divider resistor is parallelly connected to the battery pack 1. Thereafter, a microcontroller 4 having an analog-digital (A/D) converter (not shown) is connected to the power supply 2 while being parallelly connected to the second divider resistor R2. The microcontroller 4 may obtain a total terminal voltage value of the battery pack 1 from the second divider resistor R2, and then sends out a first control signal, which may include but not limited to a logic value, to the power supply 2 for the latter to supply a constant charge current source. When any one of the batteries in the battery pack 1 is charged to a first preset voltage value, the battery pack disconnects that battery from a corresponding charging circuit (not shown) thereof, so that the voltage of that battery is deducted from the total terminal voltage value, and the charge current source does not flow to that battery but to a following battery via a by-pass circuit parallelly connected to that battery. Via the series divider resistor, the microcontroller 4 may detect a voltage value P+, P- of the battery pack 1. When the detected voltage value P+, P- is smaller than a secondpreset voltage value, or when an effective FULL signal output by the battery pack 1 is received, a RESET signal 5, which may include but not limited to a logic value, is output by the microcontroller 4 to all charging circuits (not shown), so that all the charging circuits are closed again. Thereafter, it is determined whether the number of times the RESET signal 5 has been output has reached a preset value. If yes, power from the power supply 2 is interrupted by the microcontroller 4 via an ON/OFF circuit 3 to stop charging the batteries; and if not, a second control signal, which may include but not limited to a logic value, is output by the microcontroller 4 to the power supply 2, so that the power supply 2 lowers the constant current source output thereof and resumes charging the batteries in the battery pack 1. In this manner, the charge is cycled until all the batteries in the battery pack 1 are best charged.

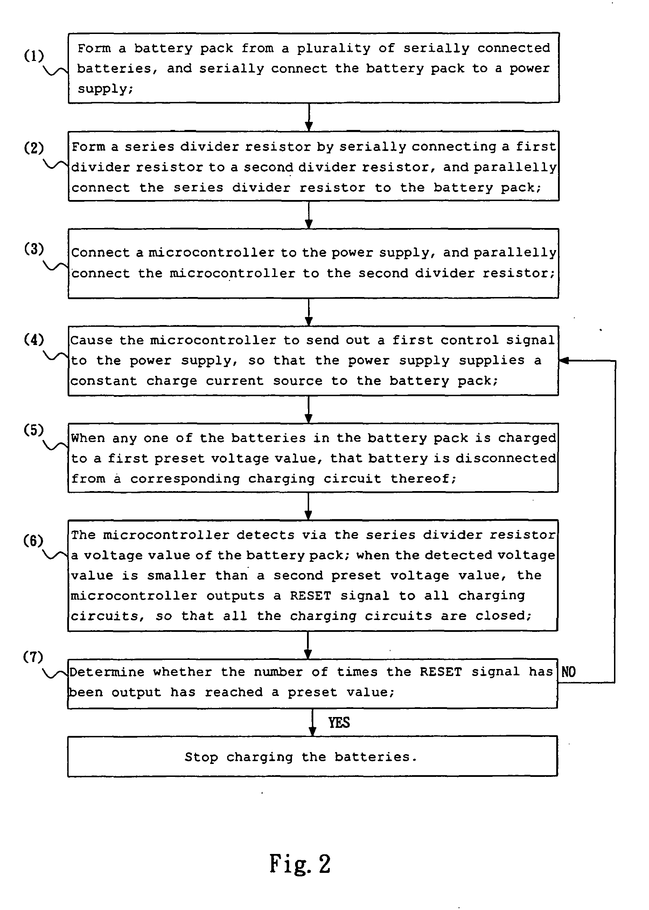

Fig. 2 is a flowchart showing the steps included in the method of charging batteries according to the present invention. Please refer to Fig. 2 along with Fig. 1. The method of the present invention includes the following steps:
(1) Form a battery pack 1 from a plurality of serially connected batteries, and serially connect the battery pack 1 to a power supply 2, wherein the power supply 2 may include but not limited to a stepped variable charger, a linear variable charger, etc.;
(2) Form a series divider resistor by serially connecting a first divider resistor R1 to a second divider resistor R2, and parallelly connect the series divider resistor to the battery pack 1;
(3) Connect a microcontroller 4 having an analog-digital (A/D) converter (not shown) to the power supply 2, and parallelly connect the microcontroller 4 to the second divider resistor R2, so that the microcontroller 4 may obtain from the second divider resistor R2 a total terminal voltage value of the battery pack 1;
(4) Cause the microcontroller 4 to send out a first control signal, which may include but not limited to a logic value, to the power supply 2, so that the power supply 2 supplies a constant charge current source;
(5) When any one of the batteries in the battery pack 1 is charged to a first preset voltage value, the battery pack 1 disconnects that battery from a corresponding charging circuit (not shown) thereof, so that the voltage of that battery is deducted from the total terminal voltage value, and the charge current does not flow to that battery but to a following battery via a by-pass circuit parallelly connected to that battery;
(6) The microcontroller 4 detects via the series divider resistor a voltage value P+, P- of the battery pack 1; when the voltage value P+, P- is smaller than a second preset voltage value, or when a FULL signal output by the battery pack 1 is received, the microcontroller 4 outputs a RESET signal 5, which may include but not limited to a logic value, to all charging circuits (not shown), so that all the charging circuits are closed again; and
(7) Determine whether the number of times the RESET signal 5 has been output has reached a preset value; if yes, power source from the power supply 2 is interrupted by the microcontroller 4 via an ON/OFF circuit 3 to stop charging the batteries; and if not, a second control signal, which may include but not limited to a logic value, is output by the microcontroller 4 to the power supply 2, so that the power supply 2 lowers the constant charge current source output thereof, and the charging returns to the step (4).

The present invention has been described with a preferred embodiment thereof and it is understood that many changes and modifications in the described embodiment can be carried out without departing from the scope of the invention that as defined by the appended claims.

## Claims

1. A method of charging batteries, comprising the following steps:
(1) forming a battery pack (1) from a plurality of serially connected batteries, and serially connecting the battery pack to a power supply (2);
(2) forming a series divider resistor by serially connecting a first divider resistor (R1) to a second divider resistor (R2), and parallelly connecting the series divider resistor to the battery pack (1);
(3) connecting a microcontroller (4) to the power supply (2), and parallelly connecting the microcontroller (4) to the second divider resistor (R2);
(4) causing the microcontroller (4) to send out a first control signal to the power supply (2), so that the power supply (2) supplies a constant charge current source to the battery pack (1); wherein:
(5) when any one of the batteries in the battery pack (1) is charged to a first preset voltage value, the battery pack (1) disconnects that battery from a corresponding charging circuit thereof; and wherein
(6) the microcontroller (4) detects via the series divider resistor a voltage value (P+, P-) of the battery pack (1); when the detected voltage value (P+, P-) is smaller than a second preset voltage value, or when a FULL signal output by the battery pack (1) is received, the microcontroller (4) outputs a RESET signal to all charging circuits, and all the charging circuits are recharged in accordance with Step (7); and
(7) determining whether the number of times the RESET signal has been output has reached a preset value; if yes, power from the power supply (2) is interrupted by the microcontroller (4) to stop charging the batteries; and if not, a second control signal is output by the microcontroller (4) to the power supply (2), so that the power supply (2) lowers the constant charge current source output thereof, and the charging process returns to Step (4).

2. The method of charging batteries as claimed in claim 1, wherein the batteries are selected from the group consisting of high-capacity capacitors and Li-ion batteries.

3. The method of charging batteries as claimed in claim 1 or 2, wherein the power supply (2) is selected from the group consisting of a stepped variable charger and a linear variable charger.

4. The method of charging batteries as claimed in one of the preceding claims, wherein the RESET signal is a logic value.

5. The method of charging batteries as claimed in one of the preceding claims, wherein the first control signal is a logic value.

6. The method of charging batteries as claimed in one of the preceding claims, wherein the second control signal is a logic value.

7. The method of charging batteries as claimed in one of the preceding claims, wherein the microcontroller (4) includes an analog-digital converter.

8. The method of charging batteries as claimed in one of the preceding claims, wherein the constant charge current source is a constant current source that allows current setting.

## Patentansprüche

1. Verfahren zum Laden von Batterien mit folgenden Schritten:
(1) Ausbilden einer Batteriegruppe (1) aus mehreren in Reihe verbundenen Batterien und Verbinden der Batteriegruppe mit einer Leistungsversorgung (2) in Reihe;
(2) Ausbilden eines Reihenteilerwiderstands durch Verbinden eines ersten Teilerwiderstands (R1) mit einem zweiten Teilerwiderstand (R2) in Reihe und Parallelverbinden des Reihenteilerwiderstands mit der Batteriegruppe (1);
(3) Verbinden eines Mikrosteuerungsgeräts (4) mit der Leistungsversorgung (2) und Parallelverbinden des Mikrosteuerungsgeräts (4) mit dem zweiten Teilerwiderstand (R2);
(4) Veranlassen des Mikrosteuerungsgeräts (4), ein erstes Steuerungssignal an die Leistungsversorgung (2) zu senden, so dass die Leistungsversorgung (2) der Batteriegruppe (1) eine konstante Ladestromquelle bereitstellt, wobei:
(5) wenn irgendeine der Batterien in der Batteriegruppe (1) auf einen ersten vorbestimmten Spannungswert aufgeladen wird, die Batteriegruppe (1) diese Batterie von einem entsprechenden Ladeschaltkreis abkoppelt; und
(6) das Mikrosteuerungsgerät (4) mittels des Reihenteilerwiderstands einen Spannungswert (P+, P-) der Batteriegruppe (1) erfasst; wobei das Mikrosteuerungsgeräts (4) ein RESET-Signal an alle Ladeschaltkreise ausgibt und alle Ladeschaltkreise gemäß Schritt (7) aufgeladen werden, wenn der erfasste Spannungswert (P+, P-) kleiner ist als ein zweiter vorbestimmter Spannungswert oder wenn ein Voll-Ausgabesignal von der Batteriegruppe (1) erhalten wird; und
(7) Bestimmen, ob die Anzahl der ausgegebenen RESET-Signale einen vorbestimmten Wert erreicht hat, und, falls dies der Fall ist, Unterbrechen der Leistung von der Leistungsversorgung (2) durch das Mikrosteuerungsgerät (4) zum Beenden des Ladens der Batterien, und, falls dies nicht der Fall ist, Ausgeben eines zweiten Steuerungssignals durch das Mikrosteuerungsgerät (4) an die Leistungsversorgung (2), so dass die Leistungsversorgung (2) den ausgegebenen konstanten Ladestrom herabsetzt, und Zurückkehren zu Schritt (4).

2. Verfahren zum Laden von Batterien nach Anspruch 1, wobei die Batterien Kondensatoren hoher Kapazität und/oder Lithium-Ionen-Batterien umfassen.

3. Verfahren zum Laden von Batterien nach Anspruch 1 oder 2, bei welchem die Leistungsversorgungsquelle (2) einen stufenweise variablen Lader und/oder einen linearen variablen Lader umfasst.

4. Verfahren zum Laden von Batterien nach einem der vorangehenden Ansprüche, bei welchem das RESET-Signal ein logischer Wert ist.

5. Verfahren zum Laden von Batterien nach einem der vorangehenden Ansprüche, bei welchem das erste Steuerungssignal ein logischer Wert ist.

6. Verfahren zum Laden von Batterien nach einem der vorangehenden Ansprüche, bei welchem das zweite Steuerungssignal ein logischer Wert ist.

7. Verfahren zum Laden von Batterien nach einem der vorangehenden Ansprüche, bei welchem das Mikrosteuerungsgerät (4) einen Analog-/Digital-Umwandler umfasst.

8. Verfahren zum Laden von Batterien nach einem der vorangehenden Ansprüche, bei welchem die Versorgungsquelle konstanter Ladung eine Quelle konstanter Stromstärke ist, welche das Einstellen der Stromstärke ermöglicht.

## Revendications

1. Procédé de charge de batteries, comprenant les étapes suivantes :
(1) de formation d'un bloc de batteries (1) à partir d'une pluralité de batteries connectées en série, et de connexion en série du bloc de batteries à une alimentation (2) ;
(2) de formation d'une résistance de diviseur série en connectant en série une première résistance de diviseur (R1) à une deuxième résistance de diviseur (R2), et en connectant en parallèle la résistance de diviseur série au bloc de batteries (1) ;
(3) de connexion d'un microcontrôleur (4) à l'alimentation (2), et de connexion en parallèle du microcontrôleur (4) à la deuxième résistance de diviseur (R2) ;
(4) de commande du microcontrôleur (4) pour qu'il délivre un premier signal de commande à l'alimentation (2), de sorte que l'alimentation (2) fournisse une source de courant de charge constant au bloc de batteries (1) ; dans lequel :
(5) lorsque l'une quelconque des batteries dans le bloc de batteries (1) est chargée à une première valeur de tension présélectionnée, le bloc de batteries (1) déconnecte cette batterie d'un circuit de charge correspondant de celle-ci ; et dans lequel
(6) le microcontrôleur (4) détecte, par l'intermédiaire de la résistance de diviseur série, une valeur de tension (P+, P-) du bloc de batteries (1) ; lorsque la valeur de tension (P+, P-) détectée est inférieure à une deuxième valeur de tension présélectionnée, ou lorsqu'un signal FULL délivré par le bloc de batteries (1) est reçu, le microcontrôleur (4) délivre un signal RESET à tous les circuits de charge, et tous les circuits de charge sont rechargés conformément à l'étape (7) ; et
(7) de détermination si le nombre de fois que le signal RESET a été délivré a atteint une valeur présélectionnée ; si c'est le cas, la puissance provenant de l'alimentation (2) est interrompue par le microcontrôleur (4) pour arrêter la charge des batteries ; et si ce n'est pas le cas, un deuxième signal de commande est délivré, par le microcontrôleur (4), à l'alimentation (2), de sorte que l'alimentation (2) diminue la source de courant de charge constant délivrée par celle-ci, et le processus de charge retourne à l'étape (4).

2. Procédé de charge de batteries selon la revendication 1, dans lequel les batteries sont sélectionnées dans le groupe consistant en des condensateurs à haute capacité et des batteries au lithium.

3. Procédé de charge de batteries selon la revendication 1 ou 2, dans lequel l'alimentation (2) est sélectionnée dans le groupe consistant en un chargeur à variation par pas et un chargeur à variation linéaire.

4. Procédé de charge de batteries selon l'une des revendications précédentes, dans lequel le signal RESET a une valeur logique.

5. Procédé de charge de batteries selon l'une des revendications précédentes, dans lequel le premier signal de commande a une valeur logique.

6. Procédé de charge de batteries selon l'une des revendications précédentes, dans lequel le deuxième signal de commande a une valeur logique.

7. Procédé de charge de batteries selon l'une des revendications précédentes, dans lequel le microcontrôleur (4) comprend un convertisseur analogique-numérique.

8. Procédé de charge de batteries selon l'une des revendications précédentes, dans lequel la source de courant de charge constant est une source de courant constant qui permet un réglage de courant.
